# DEMANDE DE BREVET EUROPEEN

(11) **EP 0 779 490 A1**
(43) Date de publication de la demande: **18.06.1997**
(21) Numéro de dépôt: 96119706.8
(22) Date de dépôt: 09.12.1996
(51) Int. Cl.: F28F 9/02

(54) **Plaque collectrice d'échangeur de chaleur, procédé pour sa fabrication et échangeur de chaleur comprenant une telle plaque collectrice**

(30) Priorité: 13.12.1995 FR 9514784
(71) Demandeur: VALEO THERMIQUE MOTEUR, 78321 La Verrière (FR)
(72) Inventeur: Letrange, Frédéric, 92000 Nanterre (FR); Martins, Carlos, 78490 Montfort l'Amaury (FR)
(74) Mandataire: Gamonal, Didier

(57) **Abrégé**

L'invention concerne une plaque collectrice pour un échangeur de chaleur.

La plaque collectrice (10) comprend une paroi de fond (26) sensiblement plane qui définit, sur une partie au moins de sa périphérie, un logement pour un talon (34) d'une boîte collectrice (12), ce logement étant délimité, d'un côté, par des saillies (38) formées sur une face interne de la paroi de fond (26) et, d'un autre côté, par un bord replié (40) à partir duquel s'étendent des pattes de retenue (32) du talon (34).

Application aux échangeurs de chaleur pour véhicules automobiles.

## Description

L'invention concerne une plaque collectrice pour un échangeur de chaleur, en particulier pour véhicule automobile.

Elle concerne également un procédé pour la fabrication d'une telle plaque collectrice, ainsi qu'un échangeur de chaleur comprenant une telle plaque collectrice.

L'invention concerne plus particulièrement une plaque collectrice du type comprenant une paroi de fond qui définit, sur une partie au moins de sa périphérie, un logement pour un talon de boîte collectrice et qui est munie de pattes de retenue repliables pour maintenir le talon.

Dans les plaques collectrices connues de ce type, le logement destiné à recevoir le talon de la boîte collectrice est habituellement réalisé sous la forme d'une gorge périphérique à section en U, obtenue par déformation de la paroi de fond.

Cette gorge périphérique est destinée à recevoir le talon de la boîte collectrice, après interposition d'un joint d'étanchéité, le talon étant maintenu par pliage des pattes de retenue pour réaliser une liaison par sertissage.

L'un des inconvénients de cette solution connue est qu'il faut prévoir des plaques collectrices spécifiques et donc des outillages spécifiques pour chaque type de plaque collectrice.

De plus, comme la gorge périphérique s'étend habituellement sur tout le pourtour de la plaque collectrice, c'est-à-dire le long de ses côtés longitudinaux et de ses côtés transversaux, la présence de la gorge au niveau de ses côtés transversaux augmente l'encombrement de la plaque collectrice dans sa grande dimension.

Il en résulte que les opérations d'assemblage de la plaque collectrice et de la boîte collectrice sont plus complexes.

L'invention a notamment pour but de surmonter les inconvénients précités.

Elle propose en conséquence une plaque collectrice du type défini en introduction, dans laquelle la paroi de fond est sensiblement plane et dans laquelle le logement du talon est délimité, d'un côté, par des saillies formées sur une face interne de la paroi de fond et, d'un autre côté, par un bord plié de la paroi de fond, à partir duquel s'étendent les pattes de retenue.

Il en résulte que la paroi de fond est essentiellement plane et qu'il n'est plus nécessaire de prévoir une gorge périphérique pour loger le talon de la boîte collectrice, comme c'était le cas des plaques collectrices de la technique antérieure.

Les saillies formées sur la face interne de la plaque collectrice servent de butée au talon de la boîte collectrice, lequel est maintenu en outre par le bord plié de la paroi de fond.

Les saillies sont avantageusement réalisées sous la forme de parties crevées qui ont une profondeur inférieure à l'épaisseur de la paroi de fond, de manière à ne pas créer d'ouvertures qui pourraient conduire à une fuite du fluide qui circule dans l'espace défini entre la plaque collectrice et la boîte collectrice.

Selon une autre caractéristique de l'invention, le bord plié se prolonge par un bord de renfort qui est rabattu et replié sur le bord plié, sur une face externe de la paroi de fond, lesdites pattes de retenue étant réalisées sous la forme de dents par des découpes en U dans l'épaisseur de la paroi de fond.

Ce bord de renfort permet de renforcer la plaque collectrice au niveau de l'assemblage avec la boîte collectrice, sans nécessiter de pièces de renfort supplémentaires.

Selon une autre caractéristique de l'invention, la paroi de fond a une forme sensiblement rectangulaire et elle comprend deux logements longitudinaux parallèles délimités chacun par une rangée de saillies et un bord longitudinal plié muni de pattes de retenue.

Avantageusement, la plaque collectrice comprend deux bords transversaux dépourvus de saillies et propres à être recouverts extérieurement par un rebord du talon.

Il en résulte que c'est la boîte collectrice qui vient border la plaque collectrice vers l'extérieur, au niveau des bords transversaux, ce qui assure le centrage de la boîte collectrice avant le sertissage, c'est-à-dire avant rabattage des pattes de retenue sur le talon de la boîte.

Ainsi, la plaque collectrice peut être réalisée sous la forme d'un profil, ce qui facilite la standardisation, puisque celui-ci peut être commun quelle que soit la longueur de la plaque collectrice.

En outre, du fait qu'il n'est plus nécessaire de prévoir de logement pour le talon dans la région des bords transversaux, il en résulte une diminution de l'encombrement en longueur de la plaque collectrice et donc de l'échangeur de chaleur.

Cela permet le passage d'un plus grand nombre de tubes d'échange de chaleur, pour une dimension égale.

Cela facilite également l'assemblage de la plaque collectrice avec le faisceau de tubes.

De façon générale, il est possible de supprimer le présertissage souvent nécessaire dans la technique antérieure, la boîte collectrice pouvant se clipper sur la plaque collectrice à son extrémité.

Selon une autre caractéristique de l'invention, la plaque collectrice est formée d'une matière métallique munie d'un alliage de brasage sur sa face externe, opposée à sa face interne.

Sous un autre aspect, l'invention concerne un procédé de fabrication d'une plaque collectrice telle que définie précédemment, qui comprend les opérations suivantes :
a) prévoir une bande métallique généralement plane présentant une face interne et une face externe;
b) former au moins une série de saillies qui dépassent du côté de la face interne;
c) former au moins une série de pattes de retenue par découpe dans l'épaisseur de la bande métallique; et
d) former au moins un bord plié à partir duquel s'étendent les pattes de retenue.

Les opérations b) et c) sont avantageusement effectuées simultanément à l'aide d'une presse.

Dans l'opération a), les pattes de retenue sont avantageusement réalisées sous la forme de dents à l'aide de découpes en U, de manière à ménager un bord de renfort qui s'étend au-delà des pattes de retenue.

Le procédé comprend avantageusement une opération supplémentaire e) consistant à rabattre et replier le bord de renfort sous le bord plié, du côté de la face externe de la bande métallique.

Les opérations d) et e) peuvent être réalisées à l'aide d'une profileuse.

Selon encore une autre caractéristique de l'invention, dans l'opération b), on forme deux séries de saillies parallèles qui s'étendent parallèlement à deux côtés longitudinaux de la bande et, dans l'opération c), on forme deux séries de pattes de retenue le long des deux côtés longitudinaux.

Cela permet de réaliser un profilé qui peut être découpé à la longueur voulue.

Le procédé de l'invention comprend avantageusement une opération supplémentaire f) consistant à former, dans la paroi de fond, des trous bordés par des collets pour la liaison ultérieure de la plaque collectrice à des tubes d'un faisceau d'échange de chaleur.

Enfin, sous un autre aspect, l'invention concerne un échangeur de chaleur comprenant au moins une plaque collectrice, telle que définie précédemment.

Dans la description qui suit, faite seulement à titre d'exemple, on se réfère aux dessins annexés, sur lesquels :
- la figure 1 est une vue partielle en perspective, avec arrachement, d'un échangeur de chaleur comprenant une plaque collectrice selon l'invention;
- la figure 2 est une vue partielle en perspective d'une plaque collectrice en cours de fabrication;
- la figure 3 est une vue analogue à celle de la figure 2 au cours d'une opération ultérieure de fabrication;
- la figure 4 est une vue analogue à celle de la figure 3 dans une autre forme de réalisation de la plaque collectrice;
- la figure 5 montre la réalisation de pattes de retenue en forme de dents;
- la figure 6 est une vue en coupe transversale de la plaque collectrice après une première opération de fabrication;
- la figure 7 est une vue en coupe analogue à celle de la figure 6 après une seconde opération de fabrication;
- la figure 8 est une vue analogue à celle de la figure 7 après une opération ultérieure; et
- la figure 9 est une vue en coupe transversale de la plaque collectrice après liaison à un faisceau de tubes et à une boîte collectrice.

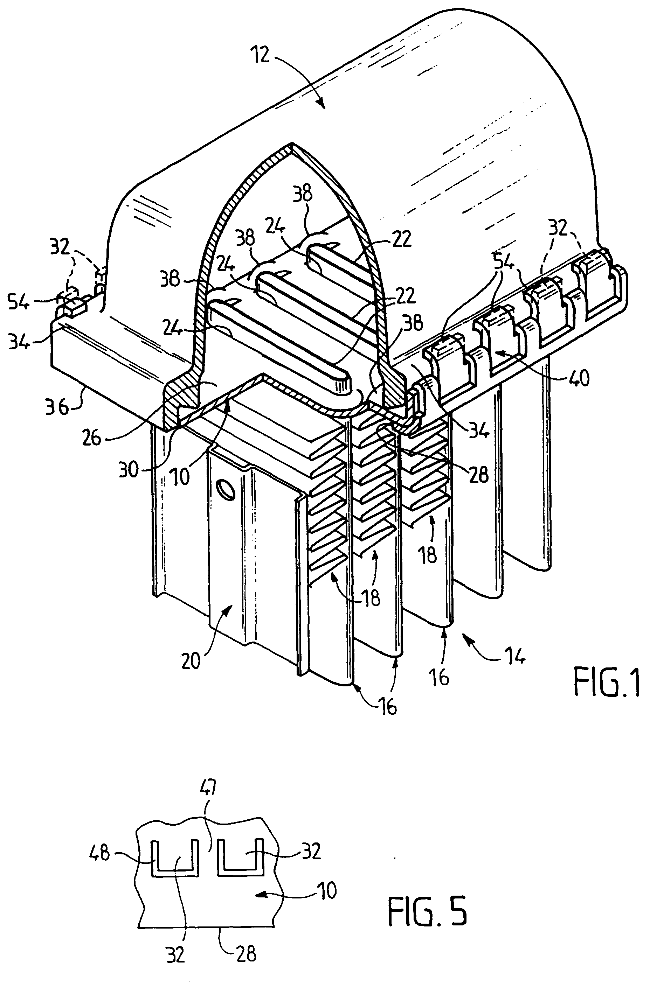

L'échangeur de chaleur représenté à la figure 1 comprend une plaque collectrice métallique 10 reliée à une boîte collectrice (ou boîte à eau) 12 en matière plastique, pour définir avec elle une chambre propre à être traversée par un fluide caloporteur. La plaque collectrice 10 est en outre réunie à un corps 14 d'échange de chaleur qui comprend une multiplicité de tubes plats 16 entre lesquels sont disposés des intercalaires ondulés 18 formant ailettes.

Le corps 14 est en outre encadré entre deux joues d'extrémité 20 dont une seule est visible sur la figure 1.

Les tubes 16 ont des extrémités respectives 22 qui traversent des trous 24 de la plaque collectrice 10.

La plaque collectrice 10 est formée d'une matière métallique, par exemple de l'aluminium, et elle comprend une paroi de fond 26 sensiblement plane et rectangulaire dans laquelle sont formés les trous 24 précités.

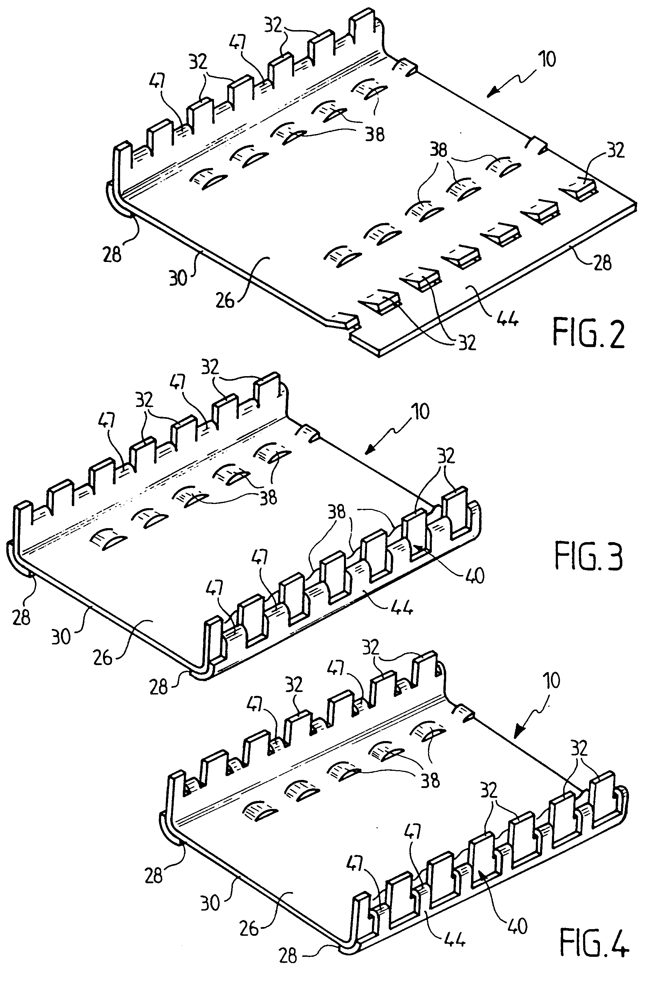

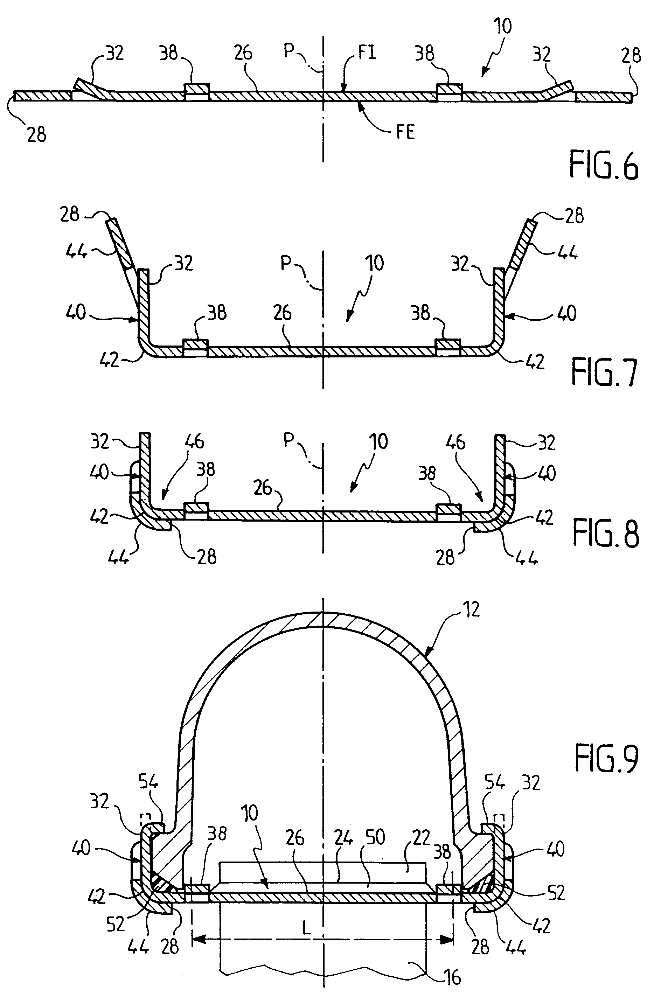

La plaque collectrice 10 est formée à partir d'une bande métallique initialement plane (figures 2 et 6) limitée par deux côtés longitudinaux 28 parallèles entre eux. Elle est en outre limitée latéralement par deux côtés transversaux 30 dont un seul est visible sur les figures 1 à 4.

Près des deux côtés longitudinaux 28 sont prévues respectivement deux séries de pattes de retenue 32 destinées au maintien de la plaque collectrice 12.

La plaque collectrice 12 est bordée par un talon 34 de contour général rectangulaire, comprenant deux parties longitudinales et deux parties transversales. Les deux parties longitudinales du talon 34 sont maintenues en appui contre la paroi de fond 26 respectivement par les deux séries de pattes 32, après rabattement de ces dernières en direction du talon. Par contre, les deux parties transversales du talon 34 ne sont pas maintenues par des pattes. En effet, chacune des parties transversales comprend un rebord 36 (figure 1) qui vient border la plaque collectrice 10 sur l'extérieur, en assurant en même temps son centrage.

Un joint d'étanchéité (non représenté sur la figure 1) est interposé entre le talon 34 et la plaque collectrice 10.

Comme on peut le voir également sur la figure 1, la paroi de fond 26 comporte deux lignes de saillies 38 disposées respectivement à proximité des deux côtés longitudinaux 28 de la plaque collectrice. Ces saillies ont pour but de maintenir les deux parties longitudinales du talon 34 pour les empêcher de pivoter vers l'intérieur. Dans l'exemple, les saillies sont réalisées sous la forme de parties crevées qui ont une profondeur inférieure à l'épaisseur de la paroi de fond 26.

On décrira maintenant la fabrication de la plaque collectrice 10 en référence particulière aux figures 2 à 8.

On part d'une bande métallique plane limitée par les deux côtés longitudinaux 28 (figures 2 et 6). Cette bande, formée par exemple en aluminium, comprend une face interne FI et une face externe FE (figure 6), cette dernière étant pourvue d'un placage de brasage.

Dans une première opération, on forme à l'aide d'une presse (non représentée) à la fois les deux lignes de saillies 38, qui ont la forme de parties crevées dont la profondeur est inférieure à l'épaisseur de la bande métallique, et les deux séries de pattes de retenue 32 (figures 2 et 6).

Les deux séries de saillies 38, de même que les deux séries de pattes 32, sont symétriques par rapport à un plan médian P de la bande métallique (figure 6).

Dans une opération ultérieure, on utilise une profileuse pour plier la bande métallique et réaliser deux bords pliés longitudinaux 40 qui se dressent à angle droit par rapport à l'âme (paroi de fond 26) de la bande métallique (figure 7). Les deux bords pliés 40 sont symétriques par rapport au plan P et reliés à la paroi de fond 26 par deux arrondis 42. Il en résulte que les pattes de retenue 32 sont dirigées perpendiculairement à la plaque de fond 26.

Par ailleurs, chaque bord dressé ou plié 40 se prolonge, au-delà des pattes 32, par un bord de renfort 44, les deux bords 44 étant évasés vers l'extérieur.

Au cours d'une opération suivante, on rabat les bords de renfort 44 de manière à les replier sous les bords pliés 40, du côté de la face externe FE. Cette opération, effectuée à l'aide d'une profileuse, conduit à la structure montrée sur la figure 8 ainsi que la figure 3. Dans la structure ainsi obtenue, les pattes 32 sont toujours dressées perpendiculairement par rapport à la plaque de fond 26 et les bords de renfort 44 viennent former une double épaisseur dans chaque région de la bande comprise autour des arrondis 42.

La structure de la plaque collectrice selon la figure 8 est représentée également en perspective sur la figure 3. La figure 2 montre une opération précédente.

Dans la configuration ainsi obtenue, la plaque collectrice définit deux logements longitudinaux 46, symétriques par rapport au plan P, et compris chacun entre une série de saillies 38 et un bord plié 40, prolongé par les pattes 32 (figure 8).

Dans la forme de réalisation de la figure 3, les pattes de retenue 32 sont des dents de forme générale rectangulaire obtenues par découpe franche de telle sorte que le bord de renfort 44 comprend une multiplicité de ponts de matière 47 dont la largeur correspond à la largeur de l'espace entre deux pattes 32 consécutives.

Dans la variante de la figure 4, les ponts de matière 47 ont une largeur inférieure à la largeur entre deux pattes 32 consécutives. Ceci est dû au fait que les pattes 32 sont obtenues par des découpes en U 48 avec enlèvement de matière, comme montré à la figure 5.

La bande métallique ainsi obtenue (figure 3, figure 4, figure 8) est découpée à la longueur voulue pour former une plaque collectrice. Puis, on forme dans la plaque de fond 26 une série de trous 24 comme décrit plus haut en référence à la figure 1.

Chacun des trous 24 est entouré d'un collet 50 comme montré à la figure 9, sur laquelle on aperçoit également l'un des tubes 16 du corps d'échange de chaleur.

La plaque collectrice 10, ainsi que les tubes 16 et les intercalaires 18, sont réunis par brasage dans un four approprié, d'où il résulte également que les deux bords pliés 40 et les deux bords de renfort sont liés deux à deux par brasage.

Il suffit ensuite de disposer la boîte collectrice 12 de manière que les deux parties longitudinales de son talon 34 s'engagent dans les deux logements 46 (figure 8). Chacune des parties longitudinales du talon se trouve ainsi maintenue entre une série de saillies 38 et l'un des bords pliés 40. Au montage, on interpose un joint d'étanchéité 52 comme montré à la figure 9.

Ce joint s'étend sur tout le pourtour de la plaque collectrice. Comme indiqué précédemment, le centrage de la boîte collectrice 12 est favorisé par les rebords 36 du talon 34.

Il suffit ensuite de replier les extrémités des pattes de retenue 32 pour constituer des extrémités rabattues 54 formant griffes.

L'invention permet ainsi de réaliser une plaque collectrice à partir d'un profilé standard qu'il suffit de couper à la longueur voulue en fonction des dimensions de la plaque collectrice, ce qui facilite les standardisations de fabrication.

Du fait que la paroi de fond 26 de la plaque collectrice est plane, elle offre plus de place pour les tubes, ce qui permet le passage d'un plus grand nombre de tubes ainsi qu'une dimension plus grande de ces tubes au niveau de leur grand axe, cette dimension pouvant atteindre une largeur maximale L comme montré à la figure 9, à condition de réduire la largeur des saillies 38.

Par ailleurs, l'assemblage de la plaque collectrice au faisceau de tubes est facilité et il est possible de faire passer un peigne de guidage des tubes entre les intercalaires ondulés et la plaque collectrice.

En outre, il est possible de supprimer une opération de présertissage, du fait que la boîte peut être clippée sur la plaque collectrice au niveau de ses extrémités longitudinales.

L'invention est tout particulièrement applicable aux échangeurs de chaleur pour véhicule automobile.

## Revendications

1. Plaque collectrice pour échangeur de chaleur, du type comprenant une paroi de fond qui définit, sur une partie au moins de sa périphérie, un logement pour un talon de boîte collectrice et qui est munie de pattes de retenue repliables pour maintenir le talon,
caractérisée en ce que la paroi de fond (26) est sensiblement plane et en ce que le logement (46) du talon (34) est délimité, d'un côté, par des saillies (38) formées sur une face interne (FI) de la paroi de fond et, d'un autre côté, par un bord replié (40) de la paroi de fond (26), à partir duquel s'étendent les pattes de retenue (32).

2. Plaque collectrice selon la revendication 1, caractérisée en ce que les saillies (38) sont espacées et alignées.

3. Plaque collectrice selon l'une des revendications 1 et 2, caractérisée en ce que les saillies (38) comprennent des parties crevées, ayant une profondeur inférieure à l'épaisseur de la paroi de fond (26).

4. Plaque collectrice selon l'une des revendications 1 à 3, caractérisée en ce que le bord plié (40) se prolonge par un bord de renfort (44) qui est rabattu et replié sous le bord plié sur une face externe (FE) de la paroi de fond, et en ce que les pattes de retenue (32) sont réalisées sous la forme de dents par des découpes en U (48) dans l'épaisseur de la paroi de fond.

5. Plaque collectrice selon l'une des revendications 1 à 4, caractérisée en ce que la paroi de fond (26) a une forme sensiblement rectangulaire et comprend deux logements longitudinaux parallèles (46) délimités chacun par une rangée de saillies (38) et par un bord longitudinal plié (40) muni de pattes de retenue (32).

6. Plaque collectrice selon la revendication 5, caractérisée en ce qu'elle comprend deux bords transversaux (30) dépourvus de saillies et propres à être recouverts extérieurement par un rebord (36) du talon (34).

7. Plaque collectrice selon l'une des revendications 1 à 6, caractérisée en ce qu'elle est formée d'une matière métallique munie d'un alliage de brasage sur sa face externe (FE) opposée à sa face interne (FI).

8. Procédé de fabrication d'une plaque collectrice selon l'une des revendications 1 à 7, caractérisé en ce qu'il comprend les opérations suivantes :
a) prévoir une bande métallique généralement plane présentant une face interne (FI) et une face externe (FE),
b) former au moins une série de saillies (38) qui dépassent du côté de la face interne (FI),
c) former au moins une série de pattes de retenue (32) par découpe dans l'épaisseur de la bande métallique, et
d) former au moins un bord plié (40) à partir duquel s'étendent les pattes de retenue (32).

9. Procédé selon la revendication 8, caractérisé en ce que les opérations b) et c) sont effectuées simultanément à l'aide d'une presse.

10. Procédé selon l'une des revendications 8 et 9, caractérisé en ce que, dans l'opération a), les pattes de retenue (32) sont réalisées sous la forme de dents à l'aide de découpes en U (48) de manière à ménager un bord de renfort (44) qui s'étend au-delà des pattes de retenue.

11. Procédé selon la revendication 10, caractérisé en ce qu'il comprend une opération supplémentaire e) consistant à rabattre et replier le bord de renfort (44) sous le bord replié (40), du côté de la face externe (FE) de la bande métallique.

12. Procédé selon l'une des revendications 8 à 11, caractérisé en ce que, dans l'opération a), on forme deux séries de saillies (38) qui s'étendent parallèlement à deux côtés longitudinaux (28) de la bande et, dans l'opération c), on forme deux séries de pattes de retenue (32) le long des deux côtés longitudinaux (28).

13. Procédé selon l'une des revendications 8 à 12, caractérisé en ce qu'il comprend une opération supplémentaire f) consistant à former, dans la paroi de fond (26), des trous (24) bordés par des collets (50) pour la liaison ultérieure de la plaque collectrice (10) à des tubes (16) d'un corps d'échange de chaleur (14).

14. Echangeur de chaleur comprenant au moins une plaque collectrice selon l'une des revendications 1 à 7 ou obtenue par la mise en oeuvre d'un procédé selon l'une des revendications 8 à 13.
